# EUROPÄISCHE PATENTSCHRIFT

(11) **EP 3 473 755 B1**
(45) Veröffentlichungstag und Bekanntmachung des Hinweises auf die Patenterteilung: **10.03.2021**
(21) Anmeldenummer: 18177450.6
(22) Anmeldetag: 13.06.2018
(51) Int. Cl.: D01G 31/00

(54) **VORRICHTUNG ZUM ERKENNEN UND AUSSCHEIDEN VON FREMDTEILEN IN ODER ZWISCHEN FASERMATERIAL**
DEVICE FOR THE DETECTION AND REMOVAL OF FOREIGN BODIES IN OR BETWEEN FIBROUS MATERIAL
DISPOSITIF DE DÉTECTION ET D'ÉLIMINATION DE CORPS ÉTRANGERS DANS OU ENTRE UNE MATIÈRE FIBREUSE

(30) Priorität: 14.09.2017 DE 102017121359
(43) Veröffentlichungstag der Anmeldung: 24.04.2019
(73) Patentinhaber: Trützschler GmbH & Co. KG, 41199 Mönchengladbach (DE)
(72) Erfinder: Duschneit, Peer, 41238 Mönchengladbach (DE); Engels, Guido, 41569 Rommerskirchen (DE)

(56) Entgegenhaltungen:
- EP-A1- 0 967 305
- WO-A1-96/35831
- WO-A1-97/14955
- DE-A1-102008 031 199

## Beschreibung

Die vorliegende Erfindung betrifft eine Vorrichtung zum Erkennen und Ausscheiden von Fremdteilen in oder zwischen Faserflocken, wobei die Faserflocken und die Fremdteile entlang eines Kanals geführt werden, der zumindest einen Glaskanal aufweist, wobei die Faserflocken und die Fremdteile im Bereich des Glaskanals beleuchtet und mittels mindestens einer Kamera oder mindestens eines Sensors detektiert werden, wobei die Fremdteile mittels Luftströmung aus dem Kanal in einen Auffangbehälter abgeführt werden.

Die DE 102008031199 A1 beschreibt eine Vorrichtung und ein Verfahren zur Detektion und Ausscheidung von Fremdteilen aus Faserflocken, die entlang eines Kanal geführt werden. Hier werden im Bereich eines Glaskanals verschiedene Beleuchtungen und Sensoren angeordnet, die mit ihrer Anordnung und Leuchtquellen immer nur eine Art von Fremdteilen (undurchsichtige Fremdteile, transparente Kunststoffe) erkennen können. Je nach Anwendungsfall und Faserqualität sind aufwändige Umbauten notwendig, um die passenden Komponenten zu installieren.

Die EP 0 967 305 A1 offenbart ein Verfahren und eine Vorrichtung zum Ausscheiden von Fremdstoffen aus Fasermaterial, insbesondere aus Baumwolle. Damit insbesondere bei Baumwollfasern Fremdstoffe bereits vor dem Pressen zu Baumwollballen ausgeschieden werden können, wird das Fasermaterial auf einer Transportfläche als breiter, offener Materialstrom an einem optischen Sensor vorbeigeführt, wobei der Sensor den Fasergutstrom mindestens im Auflicht beaufschlagt. Bei der Transportfläche handelt es sich vorteilhaft um eine Rutsche, welche zwei Behandlungsmaschinen in der Ginning-Anlage miteinander verbindet. Die Entnahme der Fremdstoffe erfolgt vorteilhaft durch Saugen von der Oberseite her

Die WO 97/14955 A1 beschreibt eine Vorrichtung zum Erkennen von Fremdteilen, mit einem in einem Kanal angeordneten Modul, das mit Leuchtkörpern bestückt ist.

Aufgabe der Erfindung ist die Weiterbildung einer Vorrichtung zum Erkennen und Ausscheiden von Fremdteilen, mit der sehr flexibel unterschiedliche Leuchtquellen und andere Komponenten verwendet werden können.

Diese Aufgabe wird ausgehend von einem Verfahren gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Die Vorrichtung zum Erkennen von Fremdteilen in oder zwischen Faserflocken weist einen Kanal auf, durch den die Faserflocken und die Fremdteile entlanggeführt werden. Zur Detektion der Fasern und der Fremdteile weist der Kanal zumindest einen transparenten Abschnitt in Form eines Glaskanales auf, durch den die Faserflocken und die Fremdteile beleuchtet und mittels mindestens einer Kamera oder mindestens eines Sensors erfasst werden. Werden Fremdteile erkannt, werden diese mittels Luftströmung aus dem Kanal in einen Auffangbehälter abgeführt.

Die Erfindung schließt die technische Lehre ein, dass die Vorrichtung im Bereich des Kanals mindestens eine Aufnahmeöffnung aufweist, in der ein standardisiertes Modul angeordnet ist, das wahlweise mit Leuchtkörpern, Kühlelementen oder Sensoren bestückbar gestaltet ist. Kerngedanke der Erfindung ist eine variable Anpassung der Vorrichtung mit unterschiedlichen Komponenten zur Detektion unterschiedlicher Fremdteile. Da nach dem Stand der Technik eine komplette Vorrichtung immer entweder für "normale" Fremdteile wie Fremdfasern, Abfall- oder Jutereste, oder undurchsichtige Kunststoffe ausgelegt war, oder alternativ für transparente Kunststoffe, bei dem eine Kombination aus polarisiertem Licht und UV-Strahlung verwendet wurde, konnten die bestehenden Vorrichten nie oder nur mit einem großen Aufwand um- oder nachgerüstet werden. Die Erfindung sieht jetzt vor, einheitliche Module in seitliche Aufnahmeöffnungen einzuschieben und zu befestigen, wobei diese Module sehr leicht zu warten und auszutauschen sind. Auch einzelne Komponenten der Module sind leicht zu warten oder auszutauschen.

Vorteilhafterweise ist das Modul innerhalb der Aufnahmeöffnung verschwenkbar angeordnet. Damit kann einerseits das Modul in der Beleuchtungsrichtung optimal auf einen zentralen Punkt innerhalb des Kanals ausgerichtet werden. Andererseits kann über die verschwenkbare Anordnung die Montage erleichtert werden, so dass beim Einschieben des Moduls in die Aufnahmeöffnung keine Komponenten beschädigt werden.

Eine bevorzugte Ausführungsform sieht vor, dass das Modul zumindest einen u-förmigen Modulträger und einen u-förmigen Rahmen aufweist, die mit ihren jeweiligen offenen Seiten einander zugeordnet sind. Durch die gegeneinander angeordneten u-förmigen Bauteile wird der notwendige Freiraum für den Einbau verschiedener Komponenten wie Leuchtkörper, Kühlelemente oder Sensoren geschaffen. Gleichzeitig sind die empfindlichen Komponenten ausreichend geschützt.

Eine weitere vorteilhafte Ausführungsform sieht vor, dass der Modulträger und der Rahmen über einen Drehpunkt drehgelenkig miteinander verbunden sind. Damit können beide Bauteile innerhalb der Aufnahmeöffnung auseinander geschwenkt werden, wodurch sehr leicht zugänglich Komponenten ausgetauscht oder gewartet werden können.

Für die Betriebsstellung sind der Modulträger und der Rahmen mittels einer lösbaren Verriegelung vollständig miteinander verbunden. Die Verriegelung kann manuell oder automatisch bedienbar ausgeführt werden und zusätzlich mittels Sicherheitskomponenten gegen ein unbeabsichtigtes Öffnen geschützt sein. Durch die Verriegelung wird in geöffneter Stellung eine Schwenkbewegung des Modulträgers und/oder des Rahmens zueinander ermöglicht. Da der Modulträger und der Rahmen beide u-förmig ausgebildet sind und mit ihren offenen Seiten einander zugewandt montiert werden, ist der Drehpunkt an einem der Schenkel des U-Profils angeordnet und der Verriegelungspunkt an den anderen Schenkel der U-Profile angeordnet.

In einer vorteilhaften Ausführungsform ist der Rahmen, der dem Glaskanal zugeordnet ist, innerhalb der Vorrichtung befestigbar. Damit bleibt die Ausrichtung des Rahmens mit der integrierten Glasscheibe zum Glaskanal unverändert, während der Modulträger aufgeschwenkt wird. Die Komponenten können gewartet oder ausgetauscht werden, ohne dass eine neue Justierung des Moduls innerhalb der Vorrichtung notwendig ist.

Der Modulträger ist so ausgestaltet, dass eine standardisierte Aufnahmevorrichtung zur Aufnahme von mindestens einem Leuchtkörper, Sensor oder Kühlelement befestigbar ist.

Die erfindungsgemäße Vorrichtung hat den Vorteil, dass über den Austausch von standardisierten Modulen verschiedene Anwendungsbereiche abgedeckt werden können. So kann die Vorrichtung mit weiteren Sensoren nachgerüstet werden, beispielsweise zur Erkennung von transparentem Kunststoff, oder die bestehenden Sensoren und Beleuchtungselemente in Abhängigkeit der verarbeiteten Faserflocken mit einer größeren Sensibilität ausgetauscht werden. Die verschwenkbare Anordnung der Module innerhalb der Vorrichtung ermöglicht eine leichte Zugänglichkeit bei Wartungsarbeiten und eine leichte Montage, bei der Beschädigungen der empfindlichen Komponenten ausgeschlossen sind. Ein weiterer Vorteil ist die winkelige Einstellbarkeit der Module zum Kanal, wodurch der Beleuchtungswinkel zur Erkennung der Fremdfasern optimiert werden kann. Ein weiterer Vorteil der Module ist die Ausgestaltung aus einem u-förmigen Modulträger und einem u-förmigen Rahmen, die mit ihrer jeweiligen offenen Seite einander zugeordnet sind und aufschwenkbar gestaltet sind, um den Austausch von Komponenten oder die Wartung zu vereinfachen. Auch Wartungsarbeiten können schnell durchgeführt werden, ohne die Komponenten neu zu justieren.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigen:
- Figur 1:: eine erfindungsgemäße Vorrichtung zum Erkennen und Ausscheiden von Fremdteilen;
- Figur 2:: ein erstes Ausführungsbeispiel eines erfindungsgemäßen Moduls;
- Figur 3:: eine weitere Darstellung eines erfindungsgemäßen Moduls in aufgeklappter Position;
- Figur 4:: eine weitere Darstellung eines erfindungsgemäßen Moduls in verschwenkter Position;
- Figur 5:: ein weiteres Ausführungsbeispiel eines erfindungsgemäßen Moduls;
- Figur 6:: ein weiteres Ausführungsbeispiel eines erfindungsgemäßen Moduls.

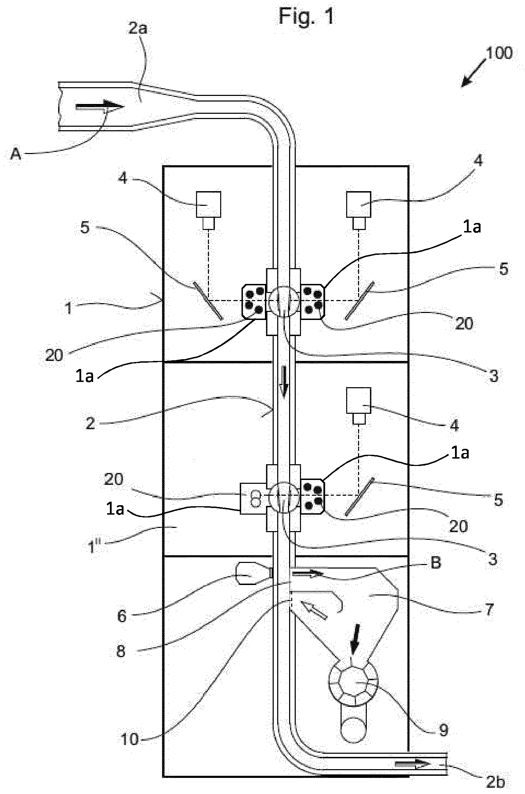

Figur 1 zeigt die erfindungsgemäße Vorrichtung 100 zur Erkennung und Ausscheidung von Fremdteilen. In einem Gehäuse 1 ist ein senkrecht angeordneter Kanal 2 vorhanden, der parallel gegenüberliegende Seitenwände aufweist, die zumindest teilweise transparent sind. Die Transparenz des Kanals 2 kann beispielsweise durch einen Glaskanal 3 gebildet werden, der seitlich in den Kanal 2 einschiebbar ist. An diesem transparenten Bereich des Kanals 2 ist mindestens ein Modul 20 angeordnet, das beispielsweise eine Beleuchtung oder einen Sensor aufweisen kann. Die Beleuchtung kann beispielsweise ein polarisiertes Licht oder ultraviolette Strahlung als Durchlicht oder Auflicht von einer oder von beiden Seiten erzeugen.

In diesem Ausführungsbeispiel sind im oberen Bereich des senkrechten Kanals zwei Module 20 gegenüberliegend angeordnet, und in Materialflussrichtung darunter angeordnet zwei weitere Module 20. Eine erste Detektoreinrichtung umfasst zwei Kameras 4, die beispielsweise als Zeilenkameras ausgebildet sein können und die den Glaskanal 3 über zwei in einem Winkel angeordnete Spiegel 5 indirekt beaufschlagen.

Die optischen Ebenen sind können versetzt zueinander angeordnet sein. Auf jeder der der Kamera 4 gegenüberliegenden Seite des Kanals 2 ist jeweils eine Beleuchtung angeordnet. Das Material im Glaskanal 3 wird auf diese Weise durch die beiden Kameras 4 von zwei Seiten detektiert.

Fasern werden mittels Luft in Strömungsrichtung A in den Eingang 2a eines Kanals 2 geführt. In diesem Ausführungsbeispiel werden im Bereich der Glaskanäle 3 die Fasern mittels der Module 20 beleuchtet. Kameras 4 können direkt oder indirekt, beispielsweise durch einen Spiegel 5 umgelenkt durch den Glaskanal 3 die Fasern erkennen und dabei Fremdpartikel oder farbigen oder durchsichtigen Kunststoff erkennen. Eine Steuerung verarbeitet die Signale der Kameras 4 weiter und steuert eine Düsenleiste 6 an, die einen Druckluft- oder Blasluftstrom erzeugt, mit dem das Fremdteil aus dem Kanal 2 in einen Auffangbehälter 7 gefördert wird. Vorzugsweise ist der Auffangbehälter 7 besaugt. Zum Ausscheiden der Fremdteile weist der Kanal 2 eine Öffnung 8 auf, die mit dem Auffangbehälter 7 verbunden ist, der mit einer Zellradschleuse 9 als Abfuhreinrichtung verbunden ist. Die Blasluft B aus der Düsenleiste 6 ist in einem geschlossenen System aus dem Auffangbehälter 7 durch eine weitere Öffnung 10 in der Wand der Fasertransportleitung 2 dem Förderluftstrom A wieder zuführbar. Die weitere Öffnung 10, die stromab der ersten Öffnung 8 angeordnet ist, ist durch ein Sieb verschlossen, das nur den Durchtritt der rückführenden Blasluft B gestattet. Auf diese Weise ist der Auffangbehälter 7 integral mit dem Kanal 2 verbunden. Die gereinigten Faserflocken werden durch den Kanal 2 weiter bis zum Ausgang 2b gefördert und dort einer weiteren Maschine zugeführt.

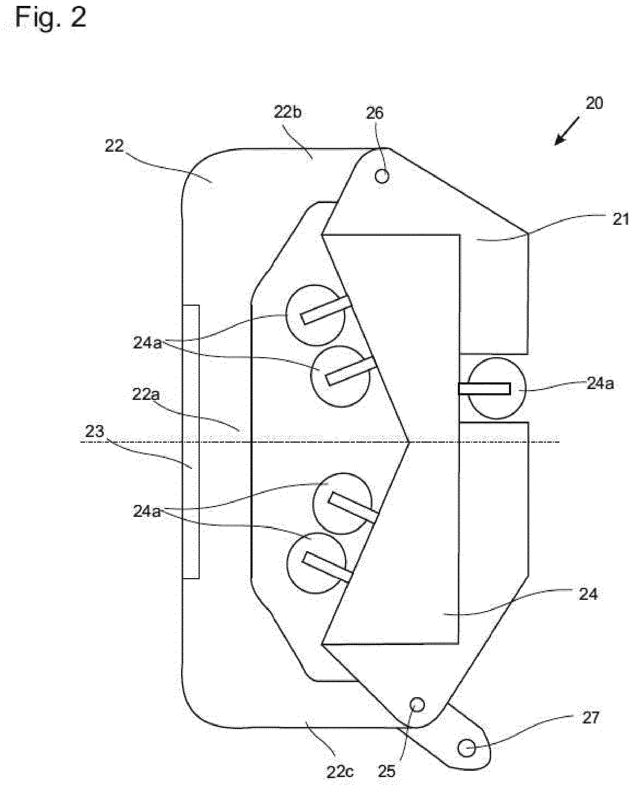

Figur 2 zeigt den Aufbau eines Moduls 20, das im Wesentlichen zumindest einen Modulträger 21 und einen Rahmen 22 umfasst. Der Rahmen 22 ist u-förmig aufgebaut und weist einen Grundkörper 22a mit zwei dazu im rechten Winkel angeordneten Schenkel 22b, 22c auf. An oder in den Grundkörper 22a ist eine Glasscheibe 23 angeordnet oder integriert, die die Strahlen eines Sensors oder Licht von mindestens einem Leuchtkörper 24a durchtreten lässt, um Fasern und Fremdteile zu detektieren oder um den Kanal 2 auszuleuchten. Die Kameras bzw. Sensoren können durch das Modul 20 von der Rückseite bzw. Außenseite des Modulträgers 21 im Bereich der Mittellinie hindurch im Glaskanal 3 die Fasern bzw. Fremdteile erkennen. Hierzu sind entsprechende nicht dargestellte Öffnungen auf der Rück- bzw. Außenseite des Modulträgers 21 angeordnet. Die Glasscheibe 23 ist im Bereich des Glaskanal 3 an diesem angeordnet oder kann auch Teil dieses Glaskanals 3 sein. In diesem Ausführungsbeispiel sind die Leuchtkörper 24a als Leuchtstoffröhren zur Erzeugung eines ultravioletten Lichtes ausgebildet.

Auch der Modulträger 21 ist u-förmig ausgebildet und nimmt in dem offen U eine Halterung 24 auf, die zwei in einem Winkel von < 180° zueinander angeordnete Oberflächen aufweist. Jede dieser Oberflächen kann mindestens eine, in diesem Ausführungsbeispiel zwei Leuchtkörper 24a aufnehmen, die in montierter Position in das offene U des Rahmens 22 eintauchen. Auf der Rückseite der Halterung 24 ist innerhalb des Modulträgers 21 noch eine Aussparung angeordnet, die einen weiteren Leuchtkörper 24a aufnehmen kann. Der Modulträger 21 und der Rahmen 22 sind mit ihren Schenkeln zueinander angeordnet und im unteren Bereich über einen Drehpunkt 25 drehgelenkig miteinander verbunden. Damit der Modulträger 21 und der Rahmen 22 zur Demontage oder alternativen Bestückung mit weiteren Bauteilen zugänglich sind, sind beide im oberen Bereich an den Schenkeln mit einer lösbaren Verriegelung 26 verbunden. Durch Lösen der Verriegelung 26 lässt sich das Modul 20 öffnen, in dem der Modulträger 21 und der Rahmen 22 über den Drehpunkt 25 auseinander verschwenkt werden können.

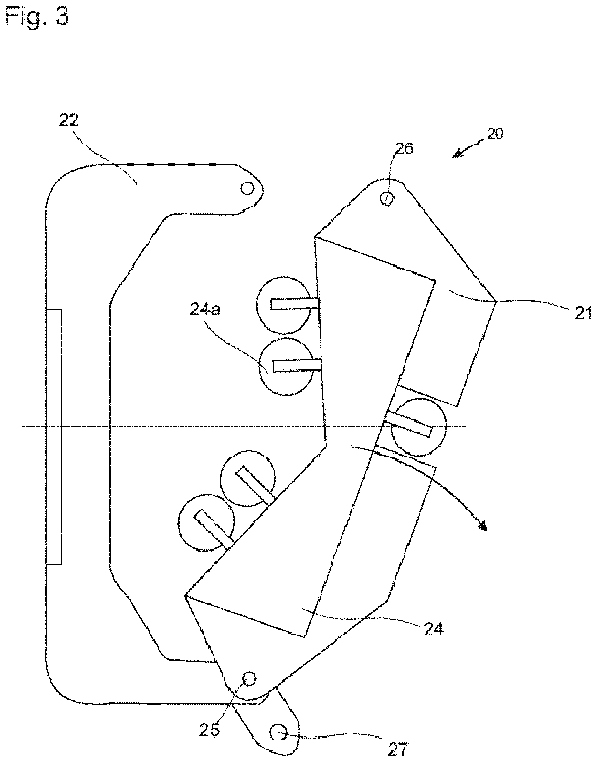

Dies wird in der nachfolgenden Figur 3 gezeigt, bei der die Verriegelung 26 gelöst wurde und der Modulträger 21 in Pfeilrichtung verschwenkt wurde, so dass der Innenraum des Modul 20 frei zugänglich wird, ohne das Modul 20 aus der Vorrichtung 100 zu demontieren. Der Rahmen 22 kann dabei weiter innerhalb einer Öffnung der Vorrichtung 100 befestigt bleiben, wobei die Glasscheibe 23 weiter in Position zum Glaskanal 3 bleibt. In dieser geöffneten Position kann die Halterung 24 entnommen und ausgetauscht werden oder nur ein einzelner Leuchtkörper 24a. Die Gestaltung des Moduls 20 zur Erkennung von Fremdteilen, umfassend zwei auseinander schwenkbare u-förmig ausgebildete Modulträger 21 und Rahmen 22, ermöglicht einen leichten Austausch und Wartung der verwendeten Komponenten. Alternativ kann auch der gesamte Modulträger 21 mit einer neuen Komponente (Sensor, Beleuchtung, Kühlung) ausgetauscht werden

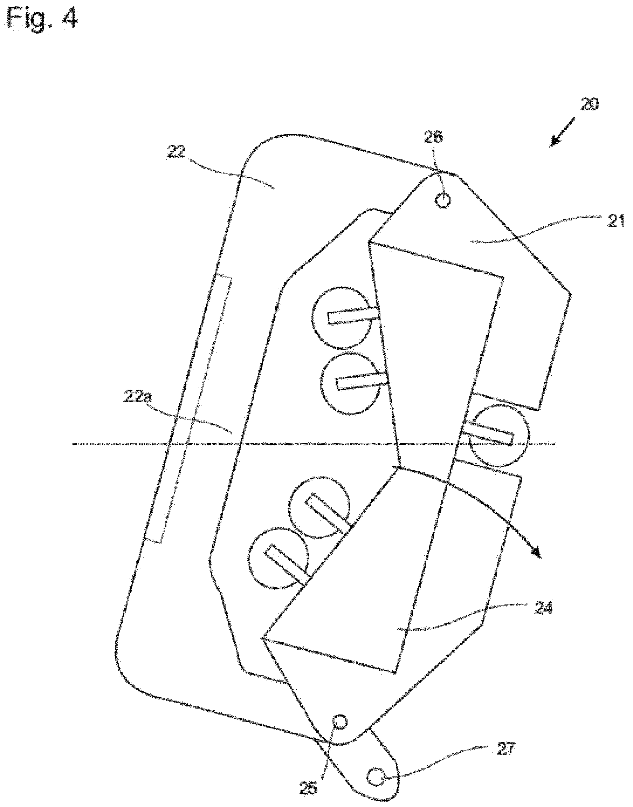

In dem Ausführungsbeispiel der Figur 4 wird das gesamte Modul 20 in einer nicht dargestellten Öffnung der Vorrichtung 100 um den Drehpunkt 25 verschwenkt. Über einen Angriffspunkt 27 kann mittels eines Zylinders oder eines anderen Stellmittels das Modul 20 verschwenkt werden, wobei vorher eine nicht dargestellte Verriegelung oder Befestigung zwischen dem Rahmen 22 und der Vorrichtung 100 zu lösen ist. Es ergibt sich damit ein freier Zugang zur Glasscheibe 23, die beispielsweise ausgetauscht oder gereinigt werden kann. Mittels der Verschwenkbarkeit des Moduls 20 über den Drehpunkt 25 kann auch der Winkel der Glasscheibe 23 zur vertikalen Ausrichtung des Kanals 2 in einem Bereich von 0° bis 6° variabel eingestellt werden. Die verschwenkbare Anordnung ermöglicht aber auch einen leichteren Einbau des Moduls 20 in die zugehörige Öffnung der Vorrichtung 100, da empfindliche Teile, wie beispielsweise die Glasscheibe 23, mit einer Abdeckung eingebaut werden können ohne zu beschädigen.

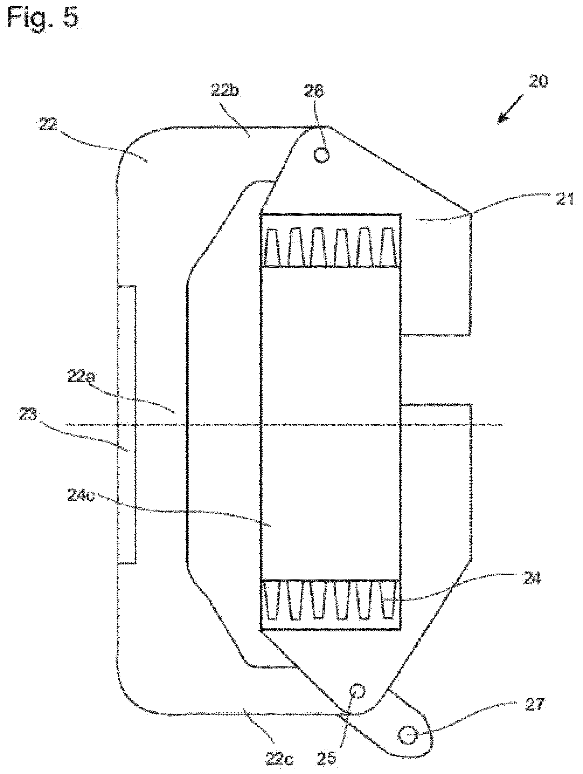

Figur 5 zeigt ein erfindungsgemäßes Modul 20 zur Aufnahme eines Kühlelementes 24c, das beispielsweise luft- oder wassergekühlt sein kann und neben der Kühlfunktion einen Teil der Elektronik mit aufnimmt, die eine große Wärme erzeugt. Die Halterung 24 wurde in diesem Ausführungsbeispiel entfernt. Das Kühlelement 24c kann gegen die Halterung 24 ausgetauscht werden, oder der gesamte Modulträger 21.

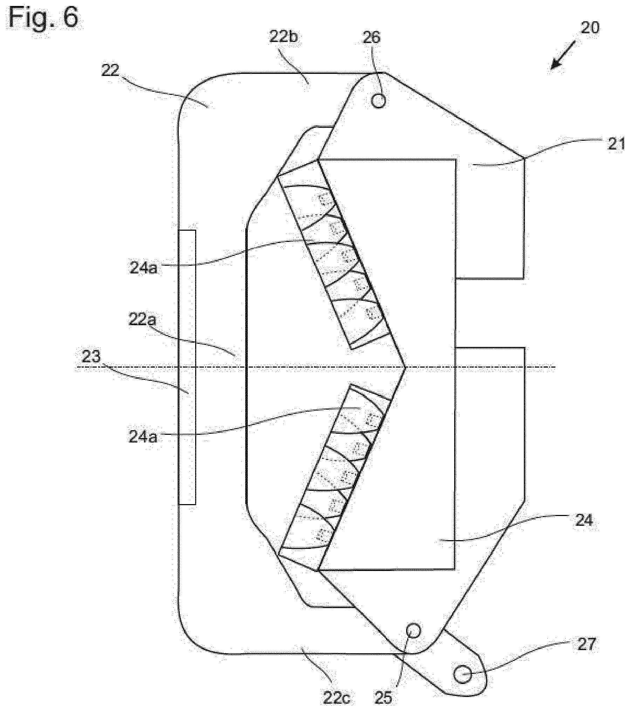

Das Ausführungsbeispiel der Figur 6 zeigt ein weiteres Modul 20, bei dem die Leuchtkörper 24a als LED's ausgebildet sind, die auf einer nicht dargestellten Platine angeordnet und auf der Halterung 24 befestigt sind.

Jedes Modul 20 kann je nach Kundenwunsch und Anwendungsfall der gewünschten Faserreinigung mit unterschiedlicher Beleuchtung für polarisiertes Licht, ultraviolettes Licht und/oder Sensoren bestückt sein. Jedes Modul 20 kann aber auch nur oder zusätzlich die elektronischen Komponenten der Beleuchtung und/oder Sensoren und die zugehörigen Kühlaggregate aufnehmen.

Die verschwenkbare Anordnung der Module 20 innerhalb der Vorrichtung 100 ermöglicht eine leichte Zugänglichkeit bei Wartungsarbeiten und eine leichte Montage, bei der Beschädigungen der empfindlichen Komponenten ausgeschlossen sind. Ein weiterer Vorteil ist die winkelige Einstellbarkeit der Module 20 zum Kanal 2, wodurch der Beleuchtungswinkel zur Erkennung der Fremdfasern optimiert werden kann.

Ein weiterer Vorteil der Module 20 ist die Ausgestaltung aus einem u-förmigen Modulträger 21 und einem u-förmigen Rahmen 22, die mit ihrer jeweiligen offenen Seite einander zugeordnet sind und aufschwenkbar gestaltet sind, um den Austausch von Komponenten oder die Wartung zu vereinfachen.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein, solange diese im Rahmen der Ansprüche liegen.

### Bezugszeichen

- 100: Vorrichtung

- 1: Gehäuse
- 1a: Aufnahmeöffnung
- 2: Kanal
- 2a: Eingang
- 2b: Ausgang
- 3: Glaskanal
- 4: Kamera
- 5: Spiegel
- 6: Düsenleiste
- 7: Auffangbehälter
- 8: Öffnung
- 9: Zellradschleuse
- 10: Öffnung

- 20: Modul
- 21: Modulträger
- 22: Rahmen
- 22a: Grundkörper
- 22b: Schenkel
- 22c: Schenkel
- 23: Glasscheibe
- 24: Halterung
- 24a: Leuchtkörper
- 24c: Kühlelement
- 25: Drehpunkt
- 26: Verriegelung
- 27: Angriffspunkt

- A: Strömungsrichtung
- B: Blasluft

## Patentansprüche

1. Vorrichtung zum Erkennen von Fremdteilen in oder zwischen Faserflocken, wobei die Faserflocken und die Fremdteile entlang eines Kanals (2) geführt werden, der zumindest einen Glaskanal (3) aufweist, wobei die Faserflocken und die Fremdteile im Bereich des Glaskanals (3) beleuchtet und mittels mindestens einer Kamera oder mindestens eines Sensors detektiert werden, wobei die Fremdteile mittels Luftströmung aus dem Kanal (2) in einen Auffangbehälter (7) abgeführt werden, **dadurch gekennzeichnet, dass** die Vorrichtung (100) im Bereich des Kanals (2) mindestens eine Aufnahmeöffnung (1a) aufweist, in der ein standardisiertes Modul (20) angeordnet ist, das wahlweise mit Leuchtkörpern (24a), Kühlelementen (24c) und/oder Sensoren bestückbar gestaltet ist.

2. Vorrichtung (100) nach Anspruch 1, **dadurch gekennzeichnet, dass** das Modul (20) innerhalb der Aufnahmeöffnung (1a) verschwenkbar angeordnet ist.

3. Vorrichtung (100) nach Anspruch 1 oder 2, **dadurch gekennzeichnet, dass** das Modul (20) zumindest einen u-förmigen Modulträger (21) und einen u-förmigen Rahmen (22) aufweist, die mit ihren jeweiligen offenen Seiten einander zugeordnet sind.

4. Vorrichtung (100) nach Anspruch 3, **dadurch gekennzeichnet, dass** der Modulträger (21) und der Rahmen (22) über einen Drehpunkt (25) drehgelenkig miteinander verbunden sind.

5. Vorrichtung (100) nach Anspruch 4, **dadurch gekennzeichnet, dass** der Modulträger (21) und der Rahmen (22) eine lösbare Verriegelung (26) aufweisen, die in geöffneter Stellung eine Schwenkbewegung des Modulträgers (21) und/oder des Rahmens (22) zueinander ermöglicht.

6. Vorrichtung (100) nach einem der Ansprüche 3 bis 5, **dadurch gekennzeichnet, dass** der Rahmen (22) eine Glasscheibe (23) aufweist, die dem Glaskanal (3) zugeordnet ist.

7. Vorrichtung (100) nach einem der Ansprüche 4 bis 6, **dadurch gekennzeichnet, dass** der Rahmen (22) innerhalb der Vorrichtung (100) befestigt ist.

8. Vorrichtung (100) nach einem der Ansprüche 3 bis 7, **dadurch gekennzeichnet, dass** der Modulträger (21) eine Aufnahmevorrichtung zur Aufnahme von mindestens einem Leuchtkörper, Sensor oder Kühlelement aufweist.

9. Vorrichtung (100) nach Anspruch 8, **dadurch gekennzeichnet, dass** die Aufnahmevorrichtung als Halterung (24) ausgebildet ist, gestaltet, Leuchtkörper (24a) in Form von Leuchtstoffröhren oder LED's aufzunehmen.

## Claims

1. A device for recognizing foreign parts in or among fibre tufts, wherein the fibre tufts and the foreign parts are guided along a channel (2), which includes at least one glass channel (3), wherein the fibre tufts and the foreign parts are illuminated in the area of the glass channel (3) and are detected by means of at least one camera or at least one sensor, wherein, from the channel (2), the foreign parts are evacuated to a collecting receptacle (7) by means of airflow, **characterized in that**, in the area of the channel (2), the device (100) includes at least one receiving opening (1a), in which a standardized module (20) is disposed, which is configured to be optionally equipped with luminous bodies (21a), cooling elements (24c) and/or sensors.

2. The device (100) according to claim 1, **characterized in that** the module (20) is pivotally disposed within the receiving opening (1a).

3. The device (100) according to claim 1 or 2, **characterized in that** the module (20) includes at least one U-shaped module carrier (21) and a U-shaped frame (22), which with the respective open sides thereof are associated to each other.

4. The device (100) according to claim 3, **characterized in that** the module carrier (21) and the frame (22) are articulately connected to each other via a point of rotation (25).

5. The device (100) according to claim 4, **characterized in that** the module carrier (21) and the frame (22) include a releasable interlocking (26), which, in the opened location, allows for a pivoting movement of the module carrier (21) and/or of the frame (22) to each other.

6. The device (100) according to any of the claims 3 to 5, **characterized in that** the frame (22) includes a glass pane (23), which is associated to the glass channel (3).

7. The device (100) according to any of the claims 4 to 6, **characterized in that** the frame (22) is attached within the device (100).

8. The device (100) according to any of the claims 3 to 7, **characterized in that** the module carrier (21) includes a receiving device for receiving at least one luminous body, sensor or cooling element.

9. The device (100) according to claim 8, **characterized in that** the receiving device is formed as a holder (24), configured to receive luminous bodies (24a) in the shape of fluorescent tubes or LEDs.

## Revendications

1. Dispositif pour reconnaître des corps étrangers dans ou parmi des flocons de fibre, les flocons de fibre et les corps étrangers étant guidés le long d'un canal (2), qui comprend au moins un canal en verre (3), les flocons de fibre et les corps étrangers étant illuminés dans la région du canal en verre (3) et étant détectés au moyen d'au moins une caméra ou d'au moins un capteur, les corps étrangers étant emmenés depuis le canal (2) vers un réservoir collecteur (7) par courant d'air, **caractérisé en ce que** le dispositif (100) comprend au moins une ouverture réceptrice (1a) dans la région du canal (2), dans laquelle un module standard (20) est agencé lequel est aménagé de façon à pouvoir être équipé au choix avec des corps lumineux (24a), des éléments refroidissants (24c) et/ou des capteurs.

2. Dispositif (100) selon la revendication 1, **caractérisé en ce que** le module (20) est agencé de façon pivotable au sein de l'ouverture réceptrice (1a).

3. Dispositif (100) selon la revendication 1 ou 2, **caractérisé en ce que** le module (20) comprend au moins un porte-module (21) en forme de U et un cadre (22) en forme de U, lesquels avec leurs faces respectives ouvertes sont associés l'un à l'autre.

4. Dispositif (100) selon la revendication 3, **caractérisé en ce que** le porte-module (21) et le cadre (22) sont connectés de façon articulée en rotation l'un à l'autre par un point de rotation (25).

5. Dispositif (100) selon la revendication 4, **caractérisé en ce que** le porte-module (21) et le cadre (22) ont un verrouillage (26) relâchable, qui, en l'emplacement ouvert, permet un mouvement pivotant du porte-module (21) et/ou du cadre (22) l'un par rapport à l'autre.

6. Dispositif (100) selon l'une des revendications 3 à 5, **caractérisé en ce que** le cadre (22) comprend une vitre en verre (23) qui est associée au canal en verre (3).

7. Dispositif (100) selon l'une des revendications 4 à 6, **caractérisé en ce que** le cadre (22) est attaché au sein du dispositif (100).

8. Dispositif (100) selon l'une des revendications 3 à 7, **caractérisé en ce que** le porte-module (21) comprend un dispositif récepteur pour recevoir au moins un corps lumineux, capteur ou élément de refroidissement.

9. Dispositif (100) selon la revendication 8, **caractérisé en ce que** le dispositif récepteur est aménagé comme support (24), établi à recevoir des corps lumineux (24a) sous forme de tubes fluorescents ou DEL.
